# EUROPÄISCHE PATENTSCHRIFT

(11) **EP 0 504 341 B1**
(45) Veröffentlichungstag und Bekanntmachung des Hinweises auf die Patenterteilung: **25.05.1994**
(21) Anmeldenummer: 91916035.8
(22) Anmeldetag: 02.10.1991
(51) Int. Cl.: G01G 19/12

(54) **LASTMESSVORRICHTUNG**
LOAD MEASURING DEVICE
DISPOSITIF DE MESURE DE LA CHARGE

(30) Priorität: 08.10.1990 CH 3237/90
(43) Veröffentlichungstag der Anmeldung: 23.09.1992
(73) Patentinhaber: WIRTH GALLO MESSTECHNIK AG, 8032 Zürich (CH)
(72) Erfinder: WIRTH, Johannes, CH-8032 Zürich (CH)
(74) Vertreter: Salgo, Reinhold Caspar, Dr.
(86) Internationale Anmeldenummer: CH9100207
(87) Internationale Veröffentlichungsnummer: WO9206357

(56) Entgegenhaltungen:
- EP-A- 0 016 238
- GB-A- 2 220 758
- US-A- 3 321 035
- US-A- 4 375 839

## Beschreibung

Die vorliegende Erfindung betrifft eine Lastmessvorrichtung für grosse Waagbrücken mit mehreren Kraftmessvorrichtungen insbesondere zum Aufbau auf Lastwagen.

Lastmessvorrichtungen für Lastwagen sind mehrere bekannt. Sie können in zwei Gattungen gegliedert werden: Erstens solche, die die Achsbelastungen messen; zweitens solche, die zwischen Chassis und Aufbau eingeschaltet sind. Die vorliegende Erfindung betrifft also Lastmessvorrichtungen der zweiten genannten Gattung. Solche Vorrichtungen sind mehrere bekannt, so beispielsweise aus WO 85/02587, GB 2 208 935 A, US 4,095,659, US 4,020,911, WO 89/08568 und GB 2 220 758 A. Das bei allen genannten Vorrichtungen sich stellende Problem ist das Einschalten der Kraftmessvorrichtungen zwischen Fahrzeugchassis und Aufbau. Bei WO 85/02587 und WO 89/08568 wird dies so gelöst, dass der Aufbau zur Messung auf vier Stelzen abgestützt wird, die je eine Kraftmessvorrichtung enthalten, wodurch die genannte Erfindung nur noch am Rande zum Stand der Technik gehört. In GB 2 208 935 A wirkt die zu messende Last des Fahrzeug-Aufbaus auf elastische Elemente; die sich durch Aufbau von Druck- und/oder Schubspannungen verformenden elastischen Elemente enthalten lineare Differentialtransformatoren, die direkt eine sich verändernde Dimension der genannten elastischen Elemente messen. Aus US 4,095 659 und US 4,020,911 sind Lastmessvorrichtungen bekannt für Langholztransportfahrzeuge, die beispielsweise vier Kraftmessvorrichtungen aufweisen. Jede Kraftmessvorrichtung besteht aus zwei symmetrisch angeordneten Biegefedern, deren Einfederung mit Dehnmessstreifen bestimmt wird.

Allen bekannten Lösungen ist gemeinsam, dass ihre Verwendung entweder einschneidende Veränderungen am Aufbau des Lastwagens bedingen, oder sie nur für spezielle Aufgaben geeignet sind. Sie sind auch allgemein platzraubend in vertikaler Richtung.

Die Aufgabe, die mit der vorliegenden Erfindung gelöst werden soll, ist die Schaffung einer aus mehreren Kraftmessvorrichtungen bestehende Wägeeinrichtung, die ohne wesentliche Eingriffe an der serienmässig gefertigten Struktur des Lastwagens zwischen Chassis und Aufbau eingeschaltet werden kann.

Ferner soll die erfindungsgemässe Lastmessvorrichtung die Last mit hoher Auflösung von mindestend 1/1000 messen, sie soll die Brücke bzw. die Aufbauten eines Lastwagens tragen unter Berücksichtigung vertikaler und horizontaler Beschleunigungen und die Verbindung Chassis/Aufbau als Punkt-Verbindungen grosser Härte in allen Richtungen und mässiger Drehhärte in allen Richtungen gewährleisten.

Die Lösung der gestellten Aufgabe ist im Patentanspruch 1 wiedergegeben. Anhand der beigefügten Zeichnung wird der Erfindungsgedanke mit mehreren Ausführungsbeispielen näher erläutert. Es zeigen:
- Fig. 1: ein Beispiel einer Gesamtanordnung,
- Fig. 2: ein erstes Ausführungsbeispiel in Ansicht von der Seite,
- Fig. 3: das erste Ausführungsbeispiel in Längsrichtung gesehen,
- Fig. 4a,b,c: ein zweites Ausführungsbeispiel in Seitenansicht, von oben und im Querschnitt,
- Fig. 5a,b: ein drittes Ausführungsbeispiel in Seiten- und Längsansicht, teilweise geschnitten,
- Fig. 6a,b: ein viertes Ausführungsbeispiel in den gleichen Ansichten, wie Fig. 5
- Fig. 7a,b: ein fünftes Ausführungsbeispiel in den gleichen Ansichten, wie Fig. 5,
- Fig. 8a,b: eine Variante zum Ausführungsbeispiel gemäss Fig. 7.

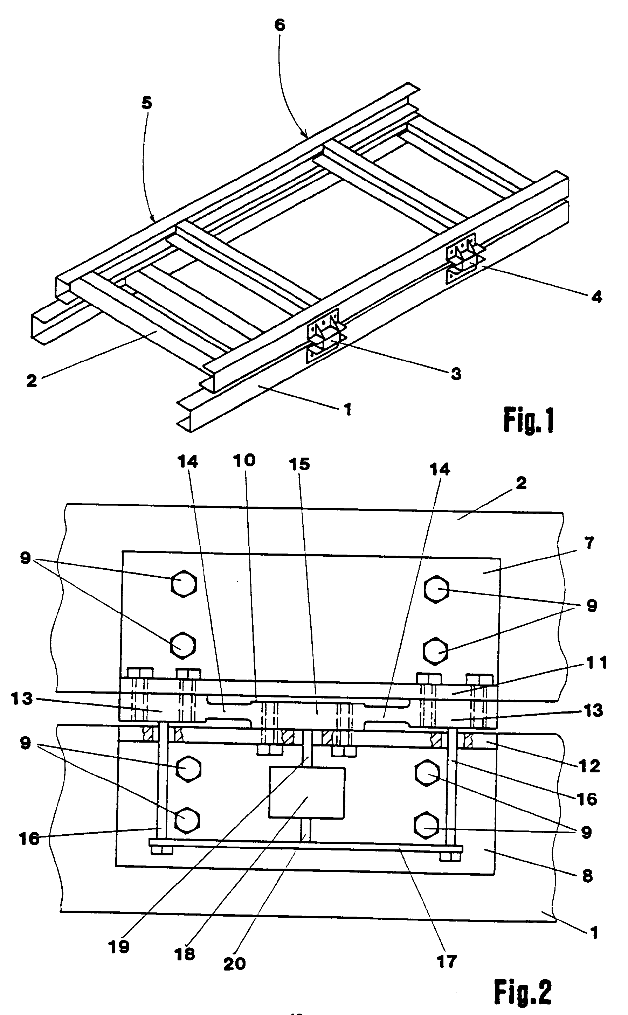

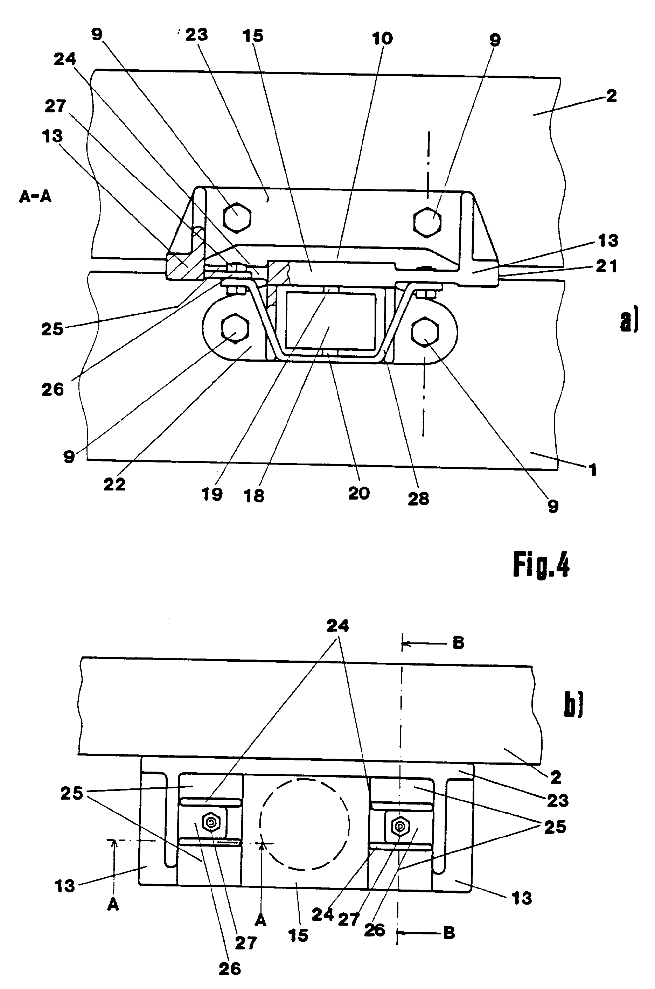

In Fig. 1 ist die Fahrzeugstruktur schematisch dargestellt. Ein aus C-förmigen Profilen zusammengeschweisster Rahmen 1 ist das Fahrzeugchassis. Nicht dargestellt sind fahrzeugspezifische Einzelheiten wie Radaufhängung, Achsen, Kabine und dergleichen. Ebenfalls aus C-förmigen Profilen ist ein Rahmen 2, auf dem verwendungsspezifische Aufbauten, wie Kasten, Brücken, Tanks befestigt werden. Ueblicherweise sind Chassis 1 und Rahmen 2 durch Schrauben miteinander verbunden. Ferner zeigt die Fig. 1 schematisch vier in den folgenden Ausführungsbeispielen vorgesehene Messstellen 3, 4, 5, 6. Die Beschränkung auf vier Messstellen ist jedoch keineswegs erfindungswesentlich. Bei langen Brücken können auch sechs oder mehr Messstellen vorgesehen werden; besondere Konstruktionen von Chassis und Aufbau können auch nur drei sinnvoll erscheinen lassen.

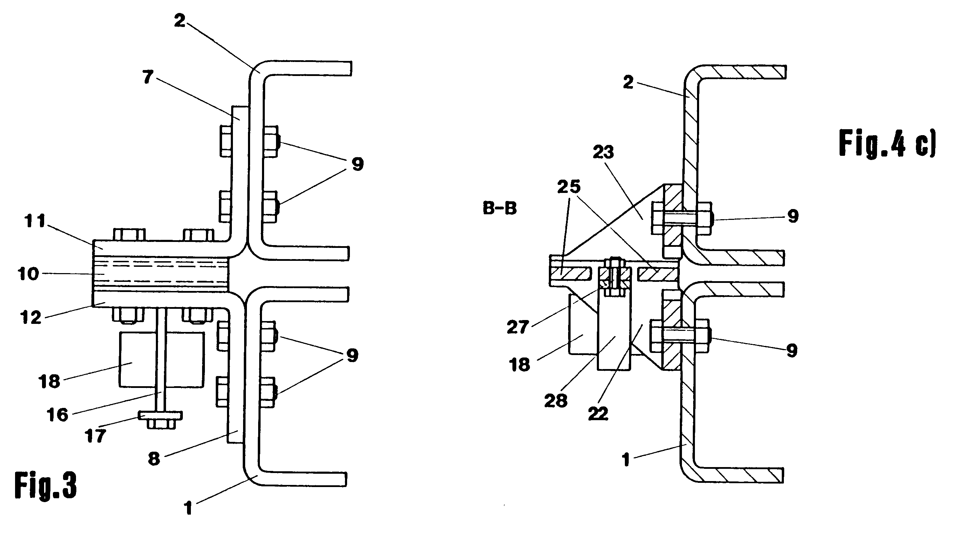

Fig. 2 zeigt die Seitenansicht - von der Fahrzeug-Aussenseite aus - eines ersten erfindungsgemässen Ausführungsbeispiels einer Messstelle. Fig. 3 zeigt eine Ansicht desselben Ausführungsbeispieles in Längsrichtung des Fahrzeuges, also senkrecht zur Ansicht von Fig. 2. Am Chassis 1 und am oberen Rahmen 2 ist je ein Winkel 7, 8 befestigt, beispielsweise mit Schrauben 9. Zwischen den horizontalen Schenkeln 11, 12 der Winkel 7,8 ist eine Biegefeder 10 befestigt, die die Primärfeder einer elastischen Untersetzung bildet und die Hauptlast der auf die Messstelle wirkenden Gewichtskraft trägt. Sie ist gegliedert in fünf Abschnitte: Zwei äussere Abschnitte 13, die in diesem Ausführungsbeispiel am oberen Schenkel 11 befestigt sind, einen zentralen Abschnitt 15, der am unteren Schenkel befestigt ist und zwei die Abschnitte 13 und 15 verbindende Abschnitte 14, die sich unter dem Einfluss der zu messenden Gewichtskraft S-förmig verbiegen. Zwei mit den Abschnitten 13 verbundene Stelzen 16 tragen eine weitere Biegefeder 17, die die Sekundärfeder der elastischen Untersetzung bildet. Zwischen dem mittleren Abschnitt 15 und der Mitte der Biegefeder 17 ist ein Kraftaufnehmer 18 eingeschaltet mittels zweier Stelzen 19, 20. Zur Sekundärfeder gehört hier, wie auch in den folgenden Ausführungsbeispielen, auch die Nachgiebigkeit des Kraftaufnehmers 18. Der Kraftaufnehmer 18 ist in diesem und auch in allen folgenden Ausführungsbeispielen vom Typ mit mindestens einer querschwingenden Saite, deren Schwingfrequenz durch die Einwirkung einer Last verändert wird.

In der Zeichnung nicht zu unterscheiden sind zwei Varianten zum Ausführungsbeispiel gemäss Fig. 2 und 3: Wird die Messstelle nun belastet, so senken sich die äusseren Abschnitte 13, damit auch die Stelzen 16. Entweder wirkt nun auf den Kraftaufnehmer 18 eine Zugkraft - als eine Ausführungsvariante - oder der Kraftaufnehmer 18 ist durch die Biegefeder 17 vorgespannt und wird nun sukzessive entlastet - als zweite Ausführungsvariante. Ein Kraftaufnehmer für die zweite Variante ist bekannt aus der CH-Patentanmeldung 00936/90-9.

Eine weitere - ebenfalls nicht gezeichnete Variante zum Ausführungsbeispiel gemäss Fig. 2, 3 besteht in folgendem: Die Abschnitte 13 der Biegefeder 10 sind am horizontalen Schenkel 12 des unteren Winkels 8 befestigt, während der mittlere Abschnitt 15 mit dem horizontalen Schenkel 11 des oberen Winkels 7 verschraubt ist. Die Stelzen 16 bleiben an den Abschnitten 13, wie beschrieben. Damit wird der Kraftaufnehmer 18 auf Druckkräfte beansprucht.

Ein zweites Ausführungsbeispiel zeigt Fig. 4a in Seitenansicht, teilweise geschnitten entlang A-A, Fig. 4b in der Ansicht von oben, Fig. 4c im Querschnitt entlang B-B. Die erfindungsgemässe Vorrichtung - als Teil des gesamten Erfindungsgegenstandes - ist hier im Sinne eines Beispiels als Gussstück 21 ausgeführt, gegliedert in ein Unterteil 22 und ein Oberteil 23. Die Biegefeder 10 besteht wiederum aus den äusseren Abschnitten 13, dem mittleren Abschnitt 15 und den zwei elastisch beanspruchten Abschnitten 14, die durch Ausfräsungen 24 in je zwei parallele Teile 25 aufgetrennt sind. Durch die Ausfräsungen 24 werden gleichzeitig zwei Zungen 26 erzeugt, die mit den äusseren Abschnitten 13 verbunden sind. Mittels Schrauben 27 ist an den Zungen 26 ein Bügel 28 befestigt, der die Sekundärfeder der elastischen Untersetzung bildet. Er trägt den Kraftaufnehmer 18 über die untere Stelze 20, während die obere Stelze kraftschlüssig mit dem mittleren Abschnitt 15 verbunden ist, welcher vom Unterteil 22 getragen wird.

Das Unterteil 22 ist am Chassis 1, das Oberteil 23 am Rahmen 2 festgeschraubt. Durch Belastung wird der mittlere Abschnitt 15 der Biegefeder 10 angehoben, der Kraftaufnehmer 18 also entlastet.

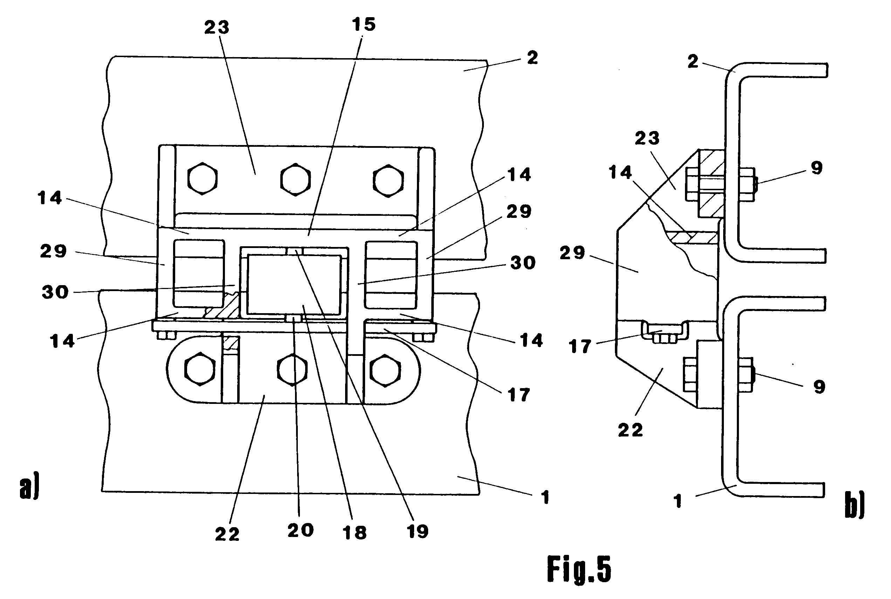

Im Ausführungsbeispiel gemäss Fig. 5a,b sind die elastisch beanspruchten Abschnitte 14 der Biegefeder 10 je doppelt ausgeführt und liegen - im wesentlichen parallel zueinander - durch je eine Platte 29 verbunden, übereinander. Der mittlere Abschnitt 15 ist mit dem Unterteil 22 verbunden mittels zweier Platten 30. An den unteren Enden der Platten 29 ist die Biegefeder 17 (Sekundärfeder) angeschraubt; sie wirkt über die Stelze 20 auf den Kraftaufnehmer 18, während der mittlere Abschnitt 15 über die Stelze 18 wirkt. Für die Fig. 4 und 5 gilt das zu Fig. 2,3 gesagte gleichermassen:

Entweder wird der Kraftaufnehmer auf Zug beansprucht, oder er ist, durch die Biegefeder 17 oder den Bügel 28, mit einer Druckkraft vorgespannt und wird durch Belasten der Vorrichtung nun sukzessive entlastet.

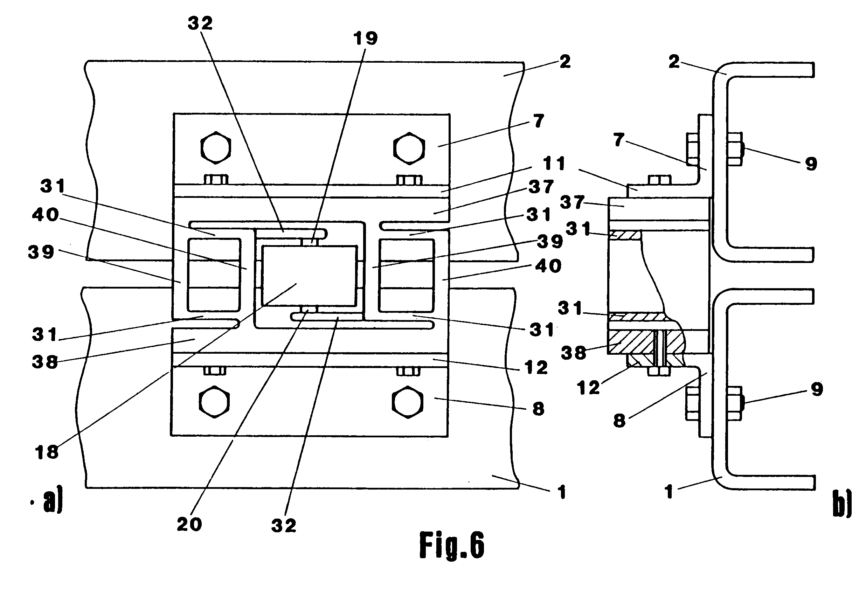

Das in Fig. 6a,b gezeigte Ausführungsbeispiel ist aus miteinander verschraubten Teilen aufgebaut. Selbstverständlich lässt es sich ebenfalls - analog zu Fig. 4 und 5 - einstückig als Gussteil erzeugen.

Zwischen den aus Fig. 2 bekannten horizontalen Schenkeln 11,12 der Winkel 7,8 ist der Messteil befestigt. Er besteht aus einer oberen horizontalen Platte 37, die mit dem horizontalen Schenkel 11 des oberen Winkels 7 verschreubt ist, und einer unteren horizontalen Platte 38, die mit dem horizontalen Schenkel des unteren Winkels 8 verschraubt ist. von der Platte 37 aus erstrecken sich zwei untereinander parallele Platten 39 nach unten, von der Platte 38 erstrecken sich analog zwei untereinander und zu den Platten 39 parallele Platten 40 nach oben.. Zwischen je einer Platte 39 und einer Platte 40 verlaufen zwei Paare von im wesentlichen parallel übereinander angeordneten Blattfedern 31, die zusammen die Primärfeder der elastischen Untersetzung bilden. In der Ebene des oberen linken Paares von Blattfedern 31 erstreckt sich - von der inneren Platte 40 ausgehend - eine Federzunge 32 nach innen, ebenso in der Ebene der unteren Blattfeder 31 des rechten Paares, ausgehend von der inneren Platte 39. Die Federzungen 32 bilden zusammen - immer mit der Nachgiebigkeit des Kraftaufnehmers 18 selbst - die Sekundärfeder. Zwischen die Federzungen 32 ist mittels der Stelzen 19,20 der Kraftaufnehmer 18 eingebaut.

Die Druckkraft vom unteren Winkel 8 biegt das linke Paar Blattfedern 31 nach oben, die Druckkraft vom Oberteil 7 das rechte Paar Blattfedern 31 nach unten. In bezug auf die Belastung des Kraftaufnehmers 18 gilt das früher Gesagte.

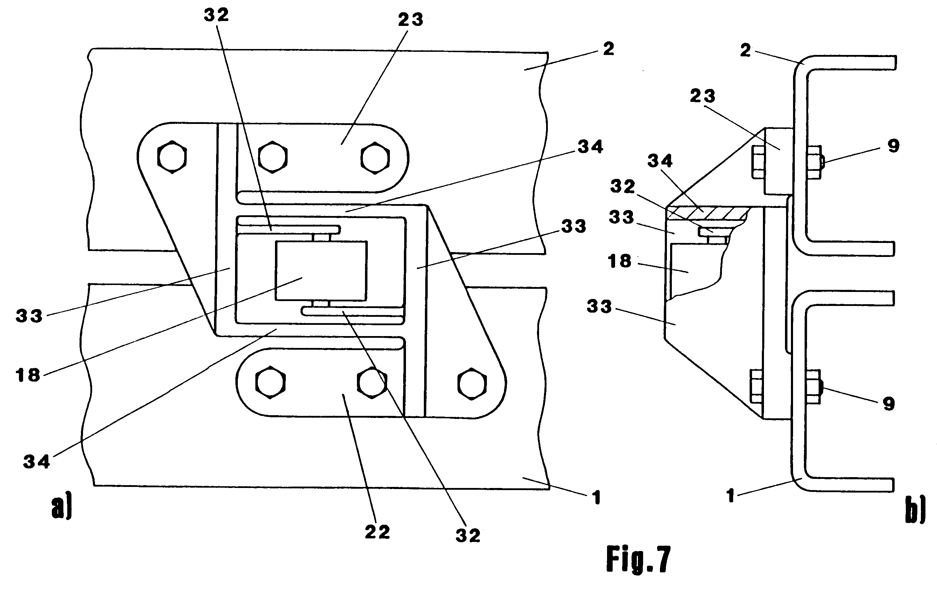

Wiederum als Gussteil ist das Ausführungsbeispiel gemäss Fig. 7 ausgeführt. Sowohl vom Oberteil 23 als auch vom Unterteil 22 geht je eine Platte 33 aus, die zusammen zwei im wesentlichen parallel laufende Blattfedern 34 tragen. Diese bilden zusammen die Primärfeder der elastischen Untersetzung. Jede der Platten 33 trägt wiederum eine Federzunge 32, die ebenfalls im wesentlichen parallel zueinander und zu den Blattfedern 34 sind. Zwischen die als Sekundärfedern wirkenden Federzungen 32 ist der Kraftaufnehmer 18 eingeschaltet, wie beschrieben.

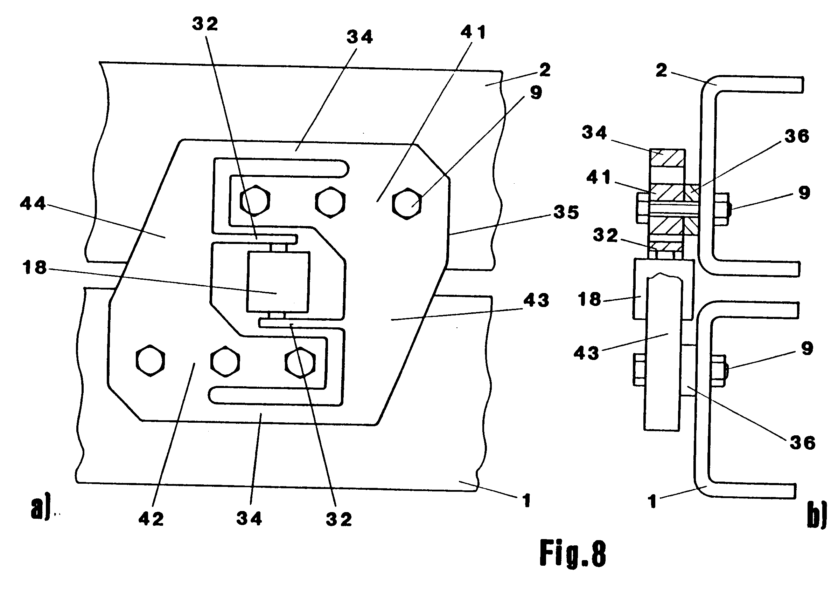

Im Ausführungsbeispiel gemäss Fig. 8, das als ebene Platte 35 ausgeführt ist, sind die Blattfedern 34 ganz nach aussen gesetzt. Die Befestigung am Chassis 1 geschieht an einem oberen Befestigungsteil 41, am Rahmen 2 an einem unteren Befestigungsteil 42, jeweils, wie in den vorstehenden Ausführungsbeispielen, mittels Schrauben 9. Vom Befestigungsteil 41 verläuft ein im wesentlichen vertikaler Träger 43 nach unten, an dem die untere Federzunge 32 und das eine Ende der unteren Blattfeder 34 ansetzt. Analog verläuft ein im wesentlichen vertikaler Träger 44 vom unteren Befestigungsteil 42 nach oben, an dem die obere Federzunge 32 und das eine Ende der oberen Blattfeder 34 ansetzen. Die anderen Enden der Blattfedern 34 schliessen an den Befestigungsteilen 41, 42 an. Zwischen Chassis 1 und Rahmen 2 einerseits und der Platte 35 anderseits sind Scheiben 36 eingesetzt, die auch für das Ausführungsbeispiel gemäss Fig 7 gültig sind. Der besondere Vorteil des Ausführungsbeispieles gemäss Fig. 8 liegt in seiner ebenen Grundgestalt, wodurch die vorliegende Geometrie beispielsweise durch Fräsen, Brennschneiden oder Drahterodieren leicht erzeugt werden kann.

Gemeinsam für alle beschriebenen Ausführungsbeispiele gilt, dass die verwendeten Begriffe "oben" und "unten" nur der Einfachheit halber für die Beschreibung der Zeichnungen gewählt sind. Die Begriffe sind selbstverständlich austauschbar, da ja mit den beschriebenen Messvorrichtungen die Kraftwirkung zwischen Rahmen 2 und Chassis 1 gemessen wird. Ferner gilt für alle Ausführungsbeispiele mit Ausnahme jenes von Fig. 8, dass sie entweder einstückig oder aus mehreren miteinander verschraubten Teilen aufgebaut sind; jenes von Fig. 8 ist nur einstückig sinnvoll.

Wie aus der Darstellung sämtlicher Ausführungsbeispiele klar hervorgeht, sind die einzelnen Messvorrichtungen konsequent **neben** den Tragstrukturen - also Chassis 1 und Rahmen 2 - aufgebaut; kein Teil ragt zwischen Chassis 1 und Rahmen 2. Damt wird die Gesamthöhe nur unwesentlich - um wenige Millimeter vergrössert, nämlich um soviel wie nötig ist, damit Chassis 1 und Rahmen 2 einander in keinem Betriebszustande berühren.

Die erfindungsgemässe Lastmessvorrichtung lässt sich an jedem gängigen Lastwagen ohne Aenderung seines Aufbaus leicht anbringen. Es müssen keinerlei Teile eines seriemässig hergestellten Lastwagens ausgetauscht oder in irgend einer Weise verändert werden. Der einzige Eingriff in die Konstruktion sind die Löcher, die für die Schrauben 9 gebohrt werden müssen.

Aus der Verbindung von Fig. 1 mit den Darstellungen der Ausführungsbeispiele der einzelnen Kraftmessvorrichtungen ergibt sich klar ein weiterer Aspekt des Erfindungsgedankens: Die Primärfedern in den einzelnen Kraftmessvorrichtungen tragen zusammen die überwiegende Hauptlast des Rahmens 2, der Aufbauten und der Nutzlast; der Lastanteil der Sekundärfedern ist klein. Die Primärfedern (Biegefedern 10, 31, 34) haben sehr flache Trägheitsellipsen, sind deshalb hart gegenüber horizontalen Kräften, mässig hart gegenüber vertikalen - zu messenden - Kräften und mässig drehhart gegenüber Momenten mit horizontaler Achse. Die Kraftmessvorrichtungen tragen also zusammen die ganze auf dem Rahmen 2 ruhende Last, zuzüglich zu dessen Eigengewicht.

Die elektrischen Signale der einzelnen Kraftaufnehmer 18 gemäss Fig. 2 bis 8 werden - wie es dem Stand der Technik entspricht, in einem Auswertegerät zusammengefasst, und die einzelnen Gewichtswerte summiert. Soll die allfällige Neigung des Lastwagens mitberücksichtigt werden, so kann an geeigneter Stelle eine Neigungsmessvorrichtung - wie sie z.B. aus dem CH-Patentgesuch 01 744/89-0 (WO-A1-90-13 798) bekannt ist - angebaut werden.

## Patentansprüche

1. Lastmessvorrichtung für grosse Waagbrücken mit mehreren Kraftmessvorrichtungen, insbesondere zum Aufbau auf Lastwagen, mit einem Chassis (1) und einem Rahmen (2),der die Aufbauten trägt, dadurch gekennzeichnet, dass
- mindestens drei Kraftmessvorrichtungen vorhanden sind, die zusammen die Last des Aufbaus und des Wägegutes tragen,
- die mindestens drei Kraftmessvorrichtungen seitlich sowohl am Chassis (1) als auch am Rahmen (2) mit mehreren Schrauben (9) befestigt sind, wobei die genannten Kraftmessvorrichtungen die einzigen tragenden Verbindungen zwischen Chassis (1) und Rahmen (2) sind,
- die einzelnen Kraftmessvorrichtungen vom elastisch untersetzenden Typ sind mit einer Primärfeder, die die Hauptlast trägt, und einer im elastischen Nebenschluss geschalteten Sekundärfeder, deren Einfederung einen Kraftaufnehmer beaufschlagt
- die in jeder Kraftmessvorrichtung vorhandene Primärfeder aus mindestens einer blattfederartigen Biegefeder (10, 31, 34) besteht,
- die in jeder Kraftmessvorrichtung vorhandene Sekundärfeder ebenfalls mindestens eine blattfederartige Biegefeder (17, 28, 32) ist,
- zwischen Primärfeder und Sekundärfeder ein Kraftaufnehmer (18) mit mindestens einer schwingenden Saite eingeschaltet ist, der den Kraftfluss über die Sekundärfeder misst,
- ausser den an Chassis (1) und Rahmen (2) angebauten Kraftmessvorrichtungen keine strukturellen Teile vorhanden sind, die zum Zwecke der Lastmessung verändert sind.
- die blattfederartigen Biegefedern (10, 31, 34) flache Trägheitsellipsen aufweisen.

2. Lastmessvorrichtung nach Patentanspruch 1, dadurch gekennzeichnet, dass die einzelne Kraftmessvorrichtung, abgesehen von Kraftaufnehmer (18), aus mehreren miteinander verschraubten Teilen aufgebaut ist.

3. Lastmessvorrichtung nach Patentanspruch 2, dadurch gekennzeichnet, dass die mehreren miteinander verschraubten Teile bestehen aus einem mit dem Rahmen (2) verschraubten Winkel (7), einem mit dem Chassis (1) verschraubten Winkel (8), einer Biegefeder (10) als Primärfeder, einer Biegefeder (17) als Sekundärfeder, zwei Stelzen (16), die die Biegefeder (16) tragen, wobei die Biegefeder (10) gegliedert ist in zwei äussere Abschnitte (13), die am horizontalen Schenkel (11) des oberen Winkels (7) befestigt sind, einen mittleren Abschnitt (15), der am horizontalen Schenkel (12) des unteren Winkels (8) befestigt ist, und zwei elastisch beanspruchte Abschnitte (14), die sich bei Belastung S-förmig verbiegen, dass ferner die zwei Stelzen (16) an den äusseren Abschnitten (13) befestigt sind, und zwei Stelzen (19, 20) vorhanden sind, mit denen die Kraft vom mittleren Abschnitt (15) und von der Mitte der Biegefeder (17) auf den Kraftaufnehmer (18) übertragen wird.

4. Lastmessvorrichtung nach Patentanspruch 2, dadurch gekennzeichnet, dass die mehreren miteinander verschraubten Teile bestehen aus einem mit dem Rahmen (2) verschraubten Winkel (7), einem mit dem Chassis (1) verschraubten Winkel (8), einer Biegefeder (10) als Primärfeder, einer Biegefeder (17) als Sekundärfeder, zwei Stelzen (16), die die Biegefeder (16) tragen, wobei die Biegefeder (10) gegliedert ist in zwei äussere Abschnitte (13), die am horizontalen Schenkel (12) des unteren Winkels (8) befestigt sind, einen mittleren Abschnitt (15), der am horizontalen Schenkel (11) des oberen Winkels (7) befestigt ist, und zwei elastisch beanspruchte Abschnitte (14), die sich bei Belastung S-förmig verbiegen, dass ferner die zwei Stelzen (16) an den äusseren Abschnitten (13) befestigt sind, und zwei Stelzen (19, 20) vorhanden sind, die die Kraft vom mittleren Abschnitt (15) und von der Mitte der Biegefeder (17) auf den Kraftaufnehmer (18) übertragen.

5. Lastmessvorrichtung nach Patentanspruch 2, dadurch gekennzeichnet, dass die miteinander verschraubten Teile bestehen aus einem Gussteil und einem als Sekundärfeder wirkenden Bügel (28), wobei das genannte Gussteil gegliedert ist in ein Oberteil (23), das am Rahmen (2) befestigt ist, in ein Unterteil (22), das am Chassis (1) befestigt ist, in eine als Primärfeder wirkende Blattfeder (10) - ihrerseits gegliedert in zwei äussere Abschnitte (13), in einen mittleren Abschnitt (15) und vier elastisch beanspruchte Teile (25), die je paarweise nebeneinander liegen - und zwei Zungen (16), die von den äusseren Abschnitten (13) getragen werden und an denen der Bügel (28) befestigt ist, dass ferner zwei Stelzen (19, 20) vorhanden sind, die die Kraft vom mittleren Abschnitt und von der Mitte des Bügels (28) auf den Kraftaufnehmer (18) übertragen.

6. Lastmessvorrichtung nach Patentanspruch 2, dadurch gekennzeichnet, dass die miteinander verschraubten Teile bestehen aus einem Gussteil und einer als Sekundärfeder wirkenden Biegefeder (17), wobei das genannte Gussteil gegliedert ist in ein Oberteil (23), das am Rahmen (2) befestigt ist, in ein Unterteil (22), das am Chassis (1) befestigt ist, in eine als Primärfeder wirkende Blattfeder (10) - ihrerseits gegliedert in zwei aussenliegende vertikale Platten (29), in einen mittleren Abschnitt (15) und vier elastisch beanspruchte Teile (25), die je paarweise im wesentlichen parallel zueinander übereinander liegen, und zwei vertikale Platten (30), die die Teile (25) mit dem mittleren Abschnitt (15) verbinden - dass die Biegefeder (17) an den Platten (29) befestigt ist, und dass ferner zwei Stelzen (19, 20) vorhanden sind, die die Kraft vom mittleren Abschnitt und von der Mitte der Biegefeder (17) auf den Kraftaufnehmer (18) übertragen.

7. Lastmessvorrichtung nach Patentanspruch 2, dadurch gekennzeichnet, dass die mehreren miteinander verschraubten Teile bestehen aus einem mit dem Rahmen (2) verschraubten Winkel (7), einem mit dem Chassis (1) verschraubten Winkel (8) und einem dazwischen liegenden einstükkig erzeugten Teil, das gegliedert ist in zwei Paare im wesentlichen paarweise parallel übereinanderliegende Blattfedern (31), die die zusammen die Primärfeder bilden, eine obere horizontale Platte (37), die mit dem horizontalen Schenkel (11) des oberen Winkels (7) verschraubt ist, eine untere horizontale Platte (38), die mit dem horizontalen Schenkel (12) des unteren Winkels (12) verschraubt ist, zwei untereinander parallele vertikale Platten (39), die an der Platte (37) anschliessen, zwei untereinander und zu den Platten (39) parallele Platten (40), die an der unteren Platte (38) anschliessen, wobei die Blattfedern (31) zwischen einer Platte (39) und einer Platte (40) verlaufen, dass ferner an jeder der innenliegenden der vertikalen Platten (39, 40) eine horizontale Zunge (32) angegliedert ist, zwischen denen mittels zweier Stelzen (19, 20) der Kraftaufnehmer (18) befestigt ist.

8. Lastmessvorrichtung nach Patentanspruch 7, dadurch gekennzeichnet, dass das einstückig erzeugte Teil aus Guss ist.

9. Lastmessvorrichtung nach Patentanspruch 7, dadurch gekennzeichnet, dass das einstückig erzeugte Teil aus Flachmaterial mittels Drahterodieren gefertigt ist.

10. Lastmessvorrichtung nach Patentanspruch 7, dadurch gekennzeichnet, dass das einstückig erzeugte Teil aus Flachmaterial mittels Brennschneiden erzeugt ist.

11. Lastmessvorrichtung nach Patentanspruch 1, dadurch gekennzeichnet, dass die einzelne Kraftmessvorrichtung abgesehen vom Kraftaufnehmer (18) einstückig gefertigt ist.

12. Lastmessvorrichtung nach Patentanspruch 11, dadurch gekennzeichnet, dass die einze Kraftmessvorrichtung gegliedert ist in ein mit dem Rahmen (2) verschraubtes Oberteil (23), ein mit dem Chassis (1) verschraubtes Unterteil (22), zwei Paare im wesentlichen paarweise parallel übereinanderliegende Blattfedern (31), die die zusammen die Primärfeder bilden, eine obere horizontale Platte (37), die zum Oberteil (23) gehört, eine untere horizontale Platte (38), die zum Unteteil (22) gehört, zwei untereinander parallele vertikale Platten (39), die an der Platte (37) anschliessen, zwei untereinander und zu den Platten (39) parallele Platten (40), die an der unteren Platte (38) anschliessen, wobei die Blattfedern (31) zwischen einer Platte (39) und einer Platte (40) verlaufen, dass ferner an jeder der innenliegenden der vertikalen Platten (39, 40) eine horizontale Zunge (32) angegliedert ist, zwischen denen mittels zweier Stelzen (19,20) der Kraftaufnehmer (18) befestigt ist.

13. Lastmessvorrichtung nach Patentanspruch 11, dadurch gekennzeichnet, dass die einze Kraftmessvorrichtung gegliedert ist in ein mit dem Rahmen (2) verschraubtes Oberteil (23), ein mit dem Chassis (1) verschraubtes Unterteil (22), ein Paar im wesentlichen parallel übereinanderliegende Blattfedern (34), die die zusammen die Primärfeder bilden, zwei untereinander parallele vertikale Platten (33), von denen die eine am Oberteil (23), die andere am Unterteil (22) anschliesst, wobei die Blattfedern (34) zwischen den Platten (33) verlaufen, dass ferner an jeder der Platten (33) eine horizontale Zunge (32) angegliedert ist, zwischen denen mittels zweier Stelzen (19, 20) der Kraftaufnehmer (18) befestigt ist.

14. Lastmessvorrichtung nach Patentanspruch 13, dadurch gekennzeichnet, dass das einstückig erzeugte Teil aus Guss ist.

15. Lastmessvorrichtung nach Patentanspruch 11, dadurch gekennzeichnet, dass die einzelne Kraftmessvorrichtung aus einer ebenen Platte (35) gefertigt ist, die gegliedert ist in ein oberes Befestigungsteil (41), das mit dem Rahmen (2) verschraubt ist, und ein unteres Befestigungsteil (42), das mit dem Chassis (1) verschraubt ist,einen vom oberen Befestigungsteil (43) ausgehenden, im wesentlichen vertikal nach unten verlaufenden, Träger (43), einen vom unteren Befestigungsteil (42) ausgehenden, im wesentlichen vertikal nach oben verlaufenden Träger (44), zwei im wesentlichen parallele und horizontal verlaufende Blattfedern (34), die zusammen die Primärfeder bilden, von denen die obere zwischen dem Oberen Befestigungsteil (41) und dem oberen Ende des Trägers (44) und die untere zwischen dem unteren Befestigungsteil (42) und dem unteren Ende des Trägers (43) verläuft, dergestalt dass die obere Blattfeder (34) über dem oberen Befestigungsteil (41), die untere Blattfeder (34) unter dem unteren Befestigungsteil (42) liegt, dass die Platte (35) ferner gegliedert ist in zwei im wesentlichen parallele Federzungen (32), die von den beiden Trägern (43, 44) nach innen verlaufen und in der Höhe versetzt sind, und dass der Kraftaufnehmer (18) mittels zweier Stelzen (19, 20) an den beiden Federzungen (32) befestigt ist.

16. Lastmessvorrichtung nach Patentanspruch 15, dadurch gekennzeichnet, dass die Gliederung der Platte (25) mittels Drahterodieren erzeugt ist.

17. Lastmessvorrichtung nach Patentanspruch 15, dadurch gekennzeichnet, dass die Gliederung der Platte (25) mittels Brennschneiden erzeugt ist.

## Claims

1. A load measuring device for large weighing-bridges with several force measuring devices, especially for installation on a goods vehicle, with a chassis (1) and a frame (2) which bears the bodywork, characterised in that
- at least three force measuring devices are provided which together bear the load of the bodywork and the goods to be weighed,
- the minimum of three force measuring devices are secured laterally to both the chassis (1) and the frame (2) through a plurality of screws (9), whereby the aforementioned force measuring devices are the sole supporting connections between the chassis (1) and frame (2),
- the individual force measuring devices of the elastic sub-structure construction are a primary spring which bears the main load and a secondary spring connected via an elastic shunt, the compression of which acts upon a force transducer,
- the primary spring present in each force measuring device comprises at least one part spring-like flexural spring (10, 31, 34),
- the secondary spring present in each force measuring device similarly comprises at least one part spring-like flexural spring (17, 28, 32),
- a force transducer (18), with at least one oscillating chord, is interposed between the primary spring and secondary spring, the said force transducer (18) measuring the force transmitted through the secondary spring,
- aside from the force measuring devices mounted on the chassis (1) and frame (2), no structural parts are changed for the purpose of load measurement,
- the part spring-like flexural springs (10, 31, 34) have flat ellipses of inertia.

2. A load measuring device according to claim 1, characterised in that each individual force measuring device, apart from the force transducer (18), is constructed from a plurality of parts screwed to each other.

3. A load measuring device according to claim 2, characterised in that the plurality of parts screwed to each other comprise an angle bracket (7) screwed to the frame (2), an angle bracket (8) screwed to the chassis (1), a flexural spring (10) as the primary spring, a flexural spring (17) as the secondary spring, two stilts (16) which bear the flexural springs (16), whereby the flexural spring (10) is divided into two outer sections (13) which are secured to the horizontal limb (11) of the upper angle bracket (7), a middle section (15) which is secured to the horizontal limb (12) of the lower angle bracket (8) and two sections (14) subject to elastic loads which bend in an S-shape under strain, and further in that the two stilts (16) are secured to the outer sections (13) and two stilts (19, 20) are provided which transmit the force from the middle section (15) and from the middle of the flexural spring (17) to the force transducer (18).

4. A load measuring device according to claim 2, characterised in that tho plurality of parts screwed to each other comprise an angle bracket (7) screwed to the frame (2), an angle bracket (8) screwed to the chassis (1), a flexural spring (10) as the primary spring, a flexural spring (17) as the secondary spring, two stilts (16) which bear the flexural springs (17), whereby the flexural spring (10) is divided into two outer sections (13) which are secured to the horizontal limb (12) of the lower angle bracket (8), a middle section (15) which is secured to the horizontal limb (11) of the upper angle bracket (7) and two sections (14) subject to elastic loads which bend in an S-shape under strain, and further in that the two stilts (16) are secured to the outer sections (13) and two stilts (19, 20) are provided which transmit the force from the middle section (15) and from the middle of the flexural spring (17) to the force transducer (18).

5. A load measuring device according to claim 2, characterised in that the parts screwed together comprise a cast part and a stirrup (28) acting as a secondary spring, whereby the said cast part is divided into an upper part (23) secured to the frame (2), a lower part (22) secured to the chassis (1), a part spring (10) acting as a primary spring - for its part divided into two outer sections (13), a middle section (15) and four parts (25) under elastic strain and lying in pairs next to each other - and two tongues (16) which are borne by the outer sections (13) and to which the stirrup (28) is secured, and further in that two stilts (19, 20) are provided which transfer the force from the middle section and from the middle of the stirrup (28) to the force transducer (18).

6. A load measuring device according to claim 2, characterised in that the parts screwed together comprise a cast part and a flexural spring (17) acting as a secondary spring, whereby the said cast part is divided into an upper part (23) secured to the frame (2), a lower part (22) secured to the chassis (1), a part spring (10) acting as a primary spring - for its part divided into two outer vertical plates (29), a middle section (15) and four parts (25) under elastic strain and arranged in pairs for the most part parallel to each other and superposed, and two vertical plates (30) which connect the parts (25) to the middle section (15) - and in that the flexural spring (17) is secured to the plates (29), and further in that two stilts (19, 20) are provided which transfer the force from the middle section and from the middle of the flexural spring (17) to the force transducer (18).

7. A load measuring device according to claim 2, characterised in that the plurality of parts screwed together comprise an angle bracket (7) screwed to the frame (2), an angle bracket (8) screwed to the chassis (1) and an interposed part derived as a single-piece which is divided into two pairs of part springs (31), constituting the primary spring, with the members of each pair lying one above the other and for the most part parallel to each other, an upper horizontal plate (37) which is screwed to the horizontal limb (11) of the upper angle bracket (7), a lower horizontal plate (38) which is screwed to the horizontal limb (12) of the lower angle bracket (12), two vertical plates (39) which extend parallel to each other and adjoin the plate (37), two plates (40) arranged parallel to each other and to the plates (39) and connected to the lower plate (38), whereby the part springs (31) extend between one plate (39) and another plate (40), and further that a horizontal tongue (32) is attached to each of the inner vertical plates (39, 40) between which the force transducer (18) is secured by means of two stilts (19, 20).

8. A load measuring device according to claim 7, characterised in that the part derived as a single piece is of cast iron.

9. A load measuring device according to claim 7, characterised in that the part derived as a single piece is manufactured from flat material through wire erosion.

10. A load measuring device according to claim 7, characterised in that the part derived as a single piece is manufactured from flat material through flame cutting.

11. A load measuring device according to claim 1, characterised in that each individual force measuring device is manufactured as a single piece, with the exception of the force transducer (18).

12. A load measuring device according to claim 11, characterised in that the individual force measuring device is divided into an upper part (23) screwed to the frame (2), a lower part (22) screwed to the chassis (1), two pairs of part springs (31) together constituting the primary springs and for the most part arranged so that each pair is parallel to the other and lying one above the other, an upper horizontal plate (37) belonging to the upper part (23), a lower horizontal plate (38) belonging to the lower part (22), two vertical plates (39) arranged parallel to each other and connected to the plate (37), two plates (40) arranged parallel to each other and to the plates (39) and connected to the lower plate (38), whereby the part springs (31) extend between one plate (39) and another plate (40), and further that a horizontal tongue (32) is attached to each of the inner vertical plates (39, 40) between which the force transducer (18) is secured by means of two stilts (19, 20).

13. A load measuring device according to claim 11, characterised in that the individual force measuring device is divided into an upper part (23) screwed to the frame (2), a lower part (22) screwed to the chassis (1), one pair of part springs (34) together constituting the primary springs and for the most part arranged parallel to each other and lying one above the other, two vertical plates (33) arranged parallel to each other, one of which is connected to the upper part (23) and the other to the lower part (22), whereby the part springs (34) extend between the plates (33), and further that a horizontal tongue (32) is attached to each of the plates (33) between which the force transducer (18) is secured by means of two stilts (19, 20).

14. A load measuring device according to claim 13, characterised in that the part derived as a single piece is of cast iron.

15. A load measuring device according to claim 11, characterised in that the individual force measuring device is constructed from a flat plate (35) which is divided into an upper fastening part (41) screwed to the frame (2) and a lower fastening part (42) screwed to the chassis (1), a supporting member (43) originating from the upper fastening part (41) and for the most part extending vertically downwards, a supporting member (44) originating from the lower fastening part (42) and for the most part extending vertically upwards, two predominantly parallel and horizontally extending part springs (34) which together constitute the primary spring, the upper of the two extending between the upper fastening part (41) and the upper end of the supporting member (44) and the lower of the two extending between the lower fastening part (42) and the lower end of the supporting member (43) such that the upper part spring (34) lies above the upper fastening part (41) and the lower part spring (34) lies beneath the lower fastening part (42) and further that the plate (35) is divided into two spring tongues (32), staggered in height, for the most part parallel to each other and extending inwards from the two supporting members (43, 44), and that the force transducer (18) is secured to both spring tongues (32) by means of two stilts (19, 20).

16. A load measuring device according to claim 15, characterised in that the division of the plate (25) is achieved through wire erosion.

17. A load measuring device according to claim 15, characterised in that the division of the plate (25) is achieved through flame cutting.

## Revendications

1. Dispositif de mesure de charge pour des grandes plates-formes de pesage, comportant plusieurs dispositifs de mesure de force et à monter notamment sur des camions formés d'un châssis (1) et d'un cadre (2) portant la carrosserie, caractérisé
- en ce qu'il est prévu au moins trois dispositifs de mesure de force qui portent ensemble la charge de la carrosserie et des produits à peser,
- en ce que ces trois dispositifs de mesure de force sont fixés latéralement non seulement au châssis (1) mais aussi au cadre (2) à l'aide de plusieurs vis (9), lesdits dispositifs de mesure de force étant les seules liaisons porteuses entre le châssis (1) et le cadre (2),
- en ce que les dispositifs de mesure de force individuels sont du type à démultiplication élastique, avec un ressort primaire qui porte la charge principale, et un ressort secondaire qui est monté dans le circuit dérivé élastique et dont la suspension sollicite le transducteur de force,
- en ce que le ressort primaire prévu dans chaque dispositif de mesure de force se compose d'au moins un ressort de compression du type à lame (10, 31, 34),
- en ce que le ressort secondaire prévu dans chaque dispositif de mesure de force consiste également en au moins un ressort de compression du type à lame (17, 28, 32),
- en ce qu'il est prévu, intercalé entre le ressort primaire et le ressort secondaire, un transducteur de force (18) comportant au moins une corde vibrante, qui mesure le flux de force par l'intermédiaire du ressort secondaire,
- en ce qu'il n'est pas prévu, en dehors des dispositifs de mesure de force montés sur le châssis (1) et le cadre (2), d'éléments de structure qui sont modifiés en vue de la mesure de charge, et
- en ce que les ressorts de compression du type à lames (10, 31, 34) présentent des ellipses d'inertie plates.

2. Dispositif de mesure de charge selon la revendication 1, caractérisé en ce que le dispositif de mesure de force individuel se compose, en dehors du transducteur de force (18), de plusieurs éléments assemblés par vissage.

3. Dispositif de mesure de charge selon la revendication 2, caractérisé en ce que les éléments assemblés par vissage se composent d'une cornière (7) vissée au cadre (2), d'une cornière (8) vissée au châssis (1), d'un ressort de compression (10) servant de ressort primaire, d'un ressort de compression (17) servant de ressort secondaire, de deux montants (16) qui portent le ressort de compression (16), le ressort de compression (10) étant divisé en deux sections extérieures (13) qui sont fixées à la branche horizontale (11) de la cornière supérieure (7), en une section centrale (15) qui est fixée à la branche horizontale (12) de la cornière inférieure (8), et en deux sections (14) contraintes de façon élastique qui se déforment en S lorsqu'elles sont sollicitées, et en ce que les deux montants (16) sont fixés aux sections extérieures (13), et il est prévu deux montants (19, 20) grâce auxquels la force est transmise de la section centrale (15) et du milieu du ressort de compression (17) au transducteur de force (18).

4. Dispositif de mesure de charge selon la revendication 2, caractérisé en ce que les éléments assemblés par vissage se composent d'une cornière (7) vissée au cadre (2), d'une cornière (8) vissée au châssis (1), d'un ressort de compression (10) servant de ressort primaire, d'un ressort de compression (17) servant de ressort secondaire, de deux montants (16) qui portent le ressort de compression (16), le ressort de compression (10) étant divisé en deux sections extérieures (13) qui sont fixées à la branche horizontale (12) de la cornière inférieure (8), en une section centrale (15) qui est fixée à la branche horizontale (11) de la cornière supérieure (7), et en deux sections (14) contraintes de façon élastique qui se déforment en S lorsqu'elles sont sollicitées, et en ce que les deux montants (16) sont fixés aux sections extérieures (13), et il est prévu deux montants (19, 20) qui transmettent la force de la section centrale (15) et du milieu du ressort de compression (17) au transducteur de force (18).

5. Dispositif de mesure de charge selon la revendication 2, caractérisé en ce que les éléments assemblés par vissage se composent d'une pièce coulée et d'un arceau (28) agissant comme ressort secondaire, ladite pièce coulée étant divisée en un élément supérieur (23) qui est fixé au cadre (2), en un élément inférieur (22) qui est fixé au châssis (1), en un ressort à lame (10) agissant comme ressort primaire et comprenant lui-même deux sections extérieures (13), une section centrale (15) et quatre éléments (25) contraints de façon élastique qui sont juxtaposés par paires, et en deux lames (16) qui sont portées par les sections extérieures (13) et auxquelles est fixé l'arceau (28), et en ce qu'il est prévu deux montants (19, 20) qui transmettent la force de la section centrale et du milieu de l'arceau (28) au transducteur de force (18).

6. Dispositif de mesure de charge selon la revendication 2, caractérisé en ce que les éléments assemblés par vissage se composent d'une pièce coulée et d'un ressort de compression (17) agissant comme ressort secondaire, ladite pièce coulée étant divisée en un élément supérieur (23) qui est fixé au cadre (2), en un élément inférieur (22) qui est fixé au châssis (1), en un ressort à lame (10) agissant comme ressort primaire et comprenant lui-même deux plaques verticales (29) placées à l'extérieur, une section centrale (15) et quatre éléments (25) contraints de façon élastique qui sont superposés sensiblement parallèlement, par paires, et deux plaques verticales (30) qui relient les éléments (25) à la section centrale (15), en ce que le ressort de compression (17) est fixé aux plaques (29) et en ce qu'il est prévu deux montants (19, 20) qui transmettent la force de la section centrale et du milieu du ressort de compression (17) au transducteur de force (18).

7. Dispositif de mesure de charge selon la revendication 2, caractérisé en ce que les éléments assemblés par vissage se composent d'une cornière (7) vissée au cadre (2), d'une cornière (8) vissée au châssis (1) et d'un élément, réalisé d'une seule pièce et placé entre les deux, qui est divisé en deux paires de ressorts à lames (31) superposés sensiblement parallèlement, qui définissent ensemble le ressort primaire, en une plaque horizontale supérieure (37) qui est vissée à la branche horizontale (11) de la cornière supérieure (7), en une plaque horizontale inférieure (38) qui est vissée à la branche horizontale (12) de la cornière inférieure (12), en deux plaques verticales (39) parallèles qui font suite à la plaque (37), et en deux plaques (40) parallèles entre elles et parallèles aux plaques (39), qui font suite à la plaque inférieure (38), étant précisé que les ressorts à lames (31) s'étendent entre une plaque (39) et une plaque (40), et en ce qu'il est prévu, au niveau des plaques verticales (39, 40) placées à l'intérieur, des lames horizontales (32) respectives entre lesquelles le transducteur de force (18) est fixé à l'aide de deux montants (19, 20).

8. Dispositif de mesure de charge selon la revendication 7, caractérisé en ce que l'élément réalisé d'une seule pièce est coulé.

9. Dispositif de mesure de charge selon la revendication 7, caractérisé en ce que l'élément réalisé d'une seule pièce est réalisé en un matériau plat par érosion au fil.

10. Dispositif de mesure de charge selon la revendication 7, caractérisé en ce que l'élément réalisé d'une seule pièce est réalisé en un matériau plat par oxycoupage.

11. Dispositif de mesure de charge selon la revendication 1, caractérisé en ce que le dispositif de mesure de force individuel est réalisé d'une seule pièce, sauf le transducteur de force (18).

12. Dispositif de mesure de charge selon la revendication 11, caractérisé en ce que le dispositif de mesure de force individuel est divisé en un élément supérieur (23) vissé au cadre (2), en un élément inférieur (22) vissé au châssis (1), en deux paires de ressorts à lames (31) superposés par paires sensiblement parallèlement qui forment ensemble le ressort primaire, en une plaque horizontale supérieure (37) qui fait partie de l'élément supérieur (23), en une plaque horizontale inférieure (38) qui fait partie de l'élément inférieur (22), en deux plaques verticales (39) parallèles qui font suite à la plaque (37), en deux plaques (40) parallèles entre elles et parallèles aux plaques (39) qui sont suite à la plaque inférieure (38), étant précisé que les ressorts à lames (31) s'étendent entre une plaque (39) et une plaque (40), et en ce qu'il est prévu, au niveau des plaques verticales (39, 40) placées à l'intérieur, des lames horizontales (32) entre lesquelles le transducteur (18) est fixé à l'aide de deux montants (19, 20).

13. Dispositif de mesure de charge selon la revendication 11, caractérisé en ce que le dispositif de mesure de force individuel est divisé en un élément supérieur (23) vissé au cadre (2), en un élément inférieur (22) vissé au châssis (1), en une paire de ressorts à lames (34) superposés sensiblement parallèlement qui forment ensemble le ressort primaire, en deux plaques verticales (33) parallèles faisant suite respectivement à l'élément supérieur (23) et à l'élément inférieur (22), étant précisé que les ressorts à lames (34) s'étendent entre les plaques (33), et en ce qu'il est prévu, au niveau des plaques (33), des lames horizontales (32) entre lesquelles le transducteur de force (18) est fixé à l'aide de deux montants (19, 20).

14. Dispositif de mesure de charge selon la revendication 13, caractérisé en ce que l'élément réalisé d'une seule pièce est coulé.

15. Dispositif de mesure de charge selon la revendication 11, caractérisé en ce que le dispositif de mesure de force individuel est réalisé à partir d'une plaque plane (35) divisée en un élément de fixation supérieur (41) qui est vissé au cadre (2), en un élément de fixation inférieur (42) qui est vissé au châssis (1), en un support (43) partant de l'élément de fixation supérieur (43) et s'étendant sensiblement verticalement vers le bas, en un support (44) partant de l'élément de fixation inférieur (42) et s'étendant sensiblement verticalement vers le haut, et en deux ressorts à lames (34) sensiblement parallèles et horizontaux qui forment ensemble le ressort primaire, le ressort supérieur s'étendant entre l'élément de fixation supérieur (41) et l'extrémité supérieure du support (44) tandis que le ressort inférieur s'étend entre l'élément de fixation inférieur (42) et l'extrémité inférieure du support (43), de telle sorte que le ressort à lame supérieur (34) se trouve sur l'élément de fixation supérieur (41) tandis que le ressort à lame inférieur (34) se trouve sous l'élément de fixation inférieur (42), en ce que la plaque (35) est divisée par ailleurs en deux lames de ressorts (32) sensiblement parallèles qui s'étendent vers l'intérieur à partir des deux supports (43, 44) et sont décalés en hauteur, et en ce que le transducteur de force (18) est fixé aux deux lames de ressorts (32) à l'aide de deux montants (19, 20).

16. Dispositif de mesure de charge selon la revendication 15, caractérisé en ce que la division de la plaque (25) est réalisée par érosion au fil.

17. Dispositif de mesure de charge selon la revendication 15, caractérisé en ce que la division de la plaque (25) est réalisée par oxycoupage.
